# EUROPÄISCHE PATENTANMELDUNG

(11) **EP 3 542 990 A1**
(43) Veröffentlichungstag der Anmeldung: **25.09.2019**
(21) Anmeldenummer: 19450006.2
(22) Anmeldetag: 21.03.2019
(51) Int. Cl.: B29C 64/106, B29C 70/78, B29D 99/00, B60N 2/70, B33Y 80/00, B33Y 10/00, B29L 31/30

(54) **VERFAHREN ZUR FERTIGUNG EINES FORMKÖRPERS**

(30) Priorität: 22.03.2018 AT 782018
(71) Anmelder: ALBA Tooling & Engineering GmbH, 5552 Forstau (AT)
(72) Erfinder: Janz, Michael, D-32609 Hüllhorst (DE); Naue, Anton, A-8970 Schladming (AT)
(74) Vertreter: Keschmann, Marc

(57) **Zusammenfassung**

Bei einem Verfahren zur Fertigung eines Formkörpers, Formkörpers, insbesondere eine Polsterauflage eines Fahrzeugsitzes, der Formkörper umfassend zumindest einen Grundkörper (1) und zumindest einen generativ gefertigten Aufbau (7), bei welchem der Aufbau (7) zumindest teilweise auf dem Grundkörper (1) und zumindest teilweise auf dem unfertigen Aufbau (7) mittels eines Druckkopfes zum Abgeben,von Material aufgebaut wird, wird wobei der Aufbau (7) in Form einer nachgiebigen, im Wesentlichen rückfedernden Struktur aufgebaut.

## Beschreibung

Verfahren zur Fertigung eines Formkörpers, insbesondere eine Polsterauflage eines Fahrzeugsitzes, der Formkörper umfassend zumindest einen Grundkörper.

Generative Fertigungsverfahren, auch 3D-Druckverfahren genannt, zeichnen sich dadurch aus, dass der Aufbau eines Formkörpers schichtweise erfolgt. Üblicherweise wird wiederholt jeweils zeilen- oder punktweise eine Arbeitsebene abgefahren und ortsselektiv Material ausgebracht und die Arbeitsebene danach nach oben verschoben. Die Schichtdicken liegen je nach Anwendungsfall zwischen 0,025 und 1,25 mm. Grundlage für 3D-Druckverfahren sind Computermodelle des zu fertigenden Objekts, welche beispielsweise unter Zuhilfenahme einer CAD-Software generiert werden können. Dabei wird ein Höhenschichtplan des zu fertigenden Objekts hergestellt, bei dem für jede Schicht ein Fertigungsraster erzeugt wird, welcher definiert, an welchen Zellen des Rasters ortselektiv Fertigungs- oder Aufbaumaterial abgelegt und verfestigt werden soll.

Bei den als Fused Deposition Modeling (FDM) oder Fused Filament Fabrication (FFF) bezeichneten Verfahren wird ein Formkörper aus einem schmelzfähigen Kunststoff schichtweise aufgebaut. Zu diesem Zweck erfolgt zunächst eine Verflüssigung eines meist in Form von Draht oder Granulat von einem Materialvorrat zugeführten Kunststoff- oder Wachsmaterials (Filament oder Granulat) durch Erwärmung sowie nachfolgend die Aufbringung des verflüssigten Materials durch Extrudieren mittels einer Düse und abschließend eine Erhärtung des Materials durch Abkühlung an der gewünschten Position der Arbeitsebene. Die Materialausbringung kann strangförmig oder punktförmig erfolgen. Wenn Überhänge, Hinterschnitte und Durchbrüche in horizontaler Richtung nicht freitragend erzeugt werden können, muss eine sogenannte Stützstruktur aus einem Stützmaterial hergestellt werden. Das Stützmaterial kann ebenfalls über eine Extruderdüse bzw. einen Druckkopf ausgebracht werden, wobei der Druckkopf von einem Materialvorrat gespeist ist, der von dem für den Formkörperaufbau vorgesehenen Material verschieden ist.

Für die letztgenannten Verfahren können derzeit Formwachse und Thermoplaste, wie z.B. Polyolefine Polyethylen, Polypropylen, Polylactid, ABS, PETG und thermoplastische Elastomere eingesetzt werden. Weiters sind unter Gewissen Umständen auch Polychloropren und Polyurethan für die Verarbeitung in den genannten Verfahren geeignet, wobei die Temperaturführung für diese Stoffgruppen wesentlich schwieriger einzustellen ist.

Herkömmliche 3D-Drucker, insbesondere solche zur Ausführung eines FDM-Verfahrens, weisen wenigstens einen Fertigungskopf bzw. Druckkopf und eine Bauplattform auf, die sowohl entsprechend einer Arbeitsrichtung in der Ebene einer Schicht als auch in der Vorschubrichtung bezogen auf die Dicke der Schichten gegeneinander verschieblich angeordnet sind.

Vorzugsweise ist die Bauplattform starr oder lediglich höhenverstellbar ausgebildet und der meist in einem Träger auswechselbar aufgenommene Druckkopf ist mit Hilfe eines Positioniersystems zweidimensional in einer Ebene oder dreidimensional im Raum positionierbar bzw. verfahrbar. Beim Positioniersystem unterscheidet man zwischen einem kartesischen System und einem sog. "Delta"-System. Das kartesische Prinzip ist einer Portalfräsmaschine nachempfunden, wobei die Positionierung des Trägers mit Hilfe von drei angetriebenen Linearachsen erfolgt, die den dreidimensionalen Bauraum mit den Koordinatenachsen X, Y und Z aufspannen. Der Delta-Drucker nutzt das Prinzip der Parallelogramm-Kinematik und kann so programmiert werden, dass der Träger leicht schwenkbar ist. Eine dreidimensionale Positionierung wird hier durch das Verfahren von drei angetriebenen, ein Dreieck aufspannenden Achsen in vertikaler Richtung realisiert, welche den Träger halten.

Weiters unterscheidet man bei den nach dem FDM-Verfahren arbeitenden 3D-Druckern zwischen zwei grundlegenden Prinzipien der Materialförderung. Beim sogenannten Direct-Drive wird eine Vorschubeinrichtung, wie z.B. ein Fördermotor, für das Filament direkt oberhalb des Druckkopfs (Hot-End) positioniert. Dies ermöglicht eine präzise Steuerung des Materialdurchflusses durch die Extruder-Düse des Druckkopfes. Beim System des Bowdenzugs hingegen ist die Vorschubeinrichtung nicht oberhalb des Druckkopfes, sondern an einer festen Position, z.B. am äußeren Rahmen des Druckers angebracht. Ein Bowdenzug, in dessen Innerem das Filament geführt ist, verbindet die Vorschubeinrichtung mit dem Druckkopf.

3D-Druckverfahren wurden im Stand der Technik bereits zur Herstellung von Polstern und Polsterungen, insbesondere für Kraftfahrzeuge eingesetzt. In der US2018/0043805A1 beispielsweise ist ein Verfahren zur Herstellung eines Sitzes offenbart, bei dem verschiedene Polsterelemente in Form eines mit einem 3D-Druckverfahren herstellten Netzwerks aus Polymeren gebildet werden. Das Drucken der Polsterelemente erfolgt hierbei wie oben beschrieben auf einer Bauplattform und die fertigen Polsterelemente werden in der Folge auf einem Grundkörper befestigt, was durch Rastverbindungen, Befestigungselemente, Klebstoffe sowie Ultraschallschweißen bewerkstelligt wird. Während US2018/0043805A1 hinsichtlich der Herstellung der Polsterelemente einen zeitgemäßen, flexiblen und kostengünstigen Ansatz zur Herstellung von Fahrzeugsitzen offenbart, ist hierdurch das Potential zur effizienten Herstellung von Fahrzeugsitzen für die Massenproduktion, noch nicht vollständig ausgeschöpft, da es nach wie vor notwendig ist, die maschinell gefertigten Polsterelemente in einem eigenen Arbeitsschritt auf der Sitzschale zu befestigen.

Es ist daher Aufgabe der vorliegenden Erfindung, ein Verfahren zu schaffen, bei dem auf einen Befestigungsschritt für die mittels 3D-Druckverfahren hergestellten Polsterelemente verzichtet werden kann, um auf diese Weise Fahrzeugsitze und ähnliche Erzeugnisse, bei denen Polsterelemente aus Kunststoffen geformt werden, besonders effizient, möglichst automatisiert und somit möglichst kostengünstig bei hoher Flexibilität hinsichtlich der Form und Anordnung der Polsterelemente herstellen zu können.

Zur Lösung dieser Aufgabe zeichnet sich ein Verfahren der eingangs genannten Art zur Herstellung eines Formkörpers, der zumindest einen Grundkörper und zumindest einen generativ gefertigten Aufbau umfasst, erfindungsgemäß dadurch aus, dass der Aufbau zumindest teilweise auf dem Grundkörper und zumindest teilweise auf dem unfertigen Aufbau mittels eines Druckkopfes zum Abgeben von Material aufgebaut wird, wobei der Aufbau in Form einer nachgiebigen, im Wesentlichen rückfedernden Struktur aufgebaut wird. Beim erfindungsgemäßen Verfahren erfolgt somit der 3D-Druck nicht auf einer Bauplattform, die nicht Teil des fertigen Erzeugnisses wird, sondern der Polsteraufbau wird direkt auf einen Grundkörper des Sitzes 3D-gedruckt, wodurch Grundkörper und Aufbau des Erzeugnisses direkt erhalten werden und stofflich miteinander verbunden sind. Ein nachträgliches Anbringen der Polsterelemente entfällt und die Polsterauflage für den Fahrzeugsitz wird unmittelbar erhalten. Das erfindungsgemäße Verfahren kann somit vollständig automatisiert werden und ist dadurch besonders effizient.

Der Formkörper umfassend den Grundkörper und den Aufbau (Polsterelemente) wird in der Regel als Polsterauflage an einem metallischen Stützgerüst für einen Fahrzeugsitz festgelegt, um den Fahrzeugsitz zu bilden.

Zur Herstellung von Polsterelementen mit für den Fahrzeugbau geeigneten Eigenschaften ist das erfindungsgemäße Verfahren bevorzugt dahingehend weitergebildet, dass der Aufbau in Form eines Netzwerks, bevorzugt dreidimensionalen Netzwerks und/oder einer porösen Matrix, aufgebaut wird. Die Entscheidung, ob ein offenes Netzwerk oder eine poröse Matrix, welche mit offenen oder geschlossenen Poren oder als Mischform mit offenen und geschlossenen Poren gedruckt werden kann, wird in Abhängigkeit von den verwendeten Materialien und der gewünschten Festigkeit des Aufbaus bzw. Polsters bzw. Polsterelements getroffen, wobei auch Faktoren wie eine gute Durchlüftung und nicht zuletzt Gewichtsüberlegungen eine Rolle spielen.

Verschiedene Materialien kommen für das 3D-Drucken des Aufbaus in Frage und die vorliegende Erfindung ist keineswegs auf irgendwelche hierin genannten Materialien beschränkt. Gemäß einer bevorzugten Ausführungsform der vorliegenden Erfindung wird der Aufbau jedoch aus einem Material ausgewählt aus der Gruppe bestehend aus Polyurethan, Polylactiden und Polyolefinen wie z.B. Polyethylen und Polyethylenterephthalat aufgebaut. Mit diesen Materialien kann ein erfindungsgemäßer Aufbau als Polster bzw. Polsterelement gedruckt werden, der gute mechanische Eigenschaften und eine hohe Lebensdauer aufweist. Der Grundkörper bildet im Rahmen der vorliegenden Erfindung das Substrat für den Aufbau zur Ausbildung des Formkörpers, beispielsweise des Fahrzeugsitzes. Demgemäß wird der Grundkörper im Wesentlichen in einer dreidimensionalen Form bereitgestellt, die der des herzustellenden Formkörpers entspricht. Wenn ein Fahrzeugsitz mit aufgedruckten Polsterelementen hergestellt werden soll, kann der Grundkörper somit in einer schalenartigen Form bereitgestellt werden. Bevorzugt wird der Grundkörper hierbei als räumliches Flächengebilde bereitgestellt.

Gemäß einer bevorzugten Ausführungsform der vorliegenden Erfindung kann allerdings auch so vorgegangen werden, das der Grundkörper in einer für das zukünftige Erzeugnis relativ unspezifischen Form bereitgestellt wird und der Formkörper, d.h. der Grundkörper mit den aufgedruckten Polsterelementen einem Verformungsschritt unterworfen wird, insbesondere bei erhöhtem Druck und/oder erhöhter Temperatur. Dies kann dann von Vorteil sein, wenn der Drucker nur in der Ebene drucken kann und der Kopf nicht verschwenkbar ist, um den Wölbungen eines schalenförmigen Grundkörpers durch Verschwenken folgen kann. Die Polsterelemente werden hierbei also auf einen ebenen Grundkörper aufgedruckt und der so erhaltenen Formkörper wird erst danach entsprechend verformt, um die schalenförmige Konfiguration eines Sitzes zu erhalten.

Die stofflichen Eigenschaften des Grundkörpers sind für das Endprodukt von wesentlicher Bedeutung, da der Grundkörper nicht wie eine Bauplattform, wie sie aus dem Stand der Technik des 3D-Druckens bekannt ist, nach dem Drucken vom Erzeugnis getrennt wird, sondern mit diesem stofflich verbunden ist und den Formkörper bildet. Der Grundkörper wird daher gemäß einer bevorzugten Ausführungsform der vorliegenden Erfindung in Form eines Netzwerks, bevorzugt als Vlies, als dreidimensionales Netzwerk und/oder als poröse Matrix bereitgestellt. Dies erlaubt hohe Festigkeiten bei gleichzeitig geringem Gewicht und Kosten. Weiters wird mit denselben Vorteilen der Grundkörper aus einem Material ausgewählt aus der Gruppe bestehend aus Polyurethan, Polylactiden und Polyolefinen wie z.B. Polyethylen und Polyethylenterephthalat bereitgestellt, wie dies einer bevorzugten Ausführungsform der vorliegenden Erfindung entspricht.

Falls nötig, kann entsprechend einer bevorzugten Ausführungsform der vorliegenden Erfindung der Grundkörper vor dem Aufbauen des Aufbaus mit einem Kunststoff beschichtet und/oder benetzt werden, bevorzugt mit einem Acrylharz und/oder Polychloropren, um die Festigkeit oder Flüssigkeitsbeständigkeit des Grundkörpers zu verbessern. Acrylharz wird in der Regel aufgegossen, aufgespritzt oder aufgewalzt. Auch Polychloropren kann auf diese Weise auf den Grundkörper aufgebracht werden und entwickelt beim Härten duroplastische Eigenschaften. Polychloropren kann jedoch bei entsprechender Temperatur im Druckkopf auch mit 3D-Druck aufgebracht werden und dann zum Pseudoduroplasten aushärten, was insbesondere deshalb für die vorliegende Erfindung von Bedeutung ist, als es dieses Vorgehen gestattet, den Prozess auf die Anwendung von 3D-Druck zu beschränken, sodass eine entsprechenden Produktionslinie für einen Fahrzeugsitz einheitlich gehalten werden kann und somit weitere positive Kosteneffekte verbucht werden können.

Es ist hinlänglich bekannt, dass es mit 3D-Druck möglich ist, so gut wie jede dreidimensionale Form herzustellen. Dies ist bei der Herstellung von Fahrzeugsitzen von großer Bedeutung, da dem Kunden immer mehr verschiedene Ausstattungsvarianten eines Fahrzeugtyps angeboten werden sollen, die sich nicht nur aber eben auch in der Ausführung der Fahrzeugsitze und deren Polsterung unterscheiden können. So sind beispielsweise Varianten von Fahrzeugsitzen denkbar, die vor allem günstig sind, Varianten, die sich durch besonders hohen Komfort auszeichnen und Varianten, die für ein sportliches Fahrgefühl besonders guten Seitenhalt aufweisen. Die vorliegende Erfindung ist besonders geeignet, diese Ausstattungsvarianten kostengünstig herzustellen, wenn der Grundkörper mit Strukturen für die Herstellung unterschiedlicher Varianten von Formkörpern bereitgestellt wird und der Aufbau je nach gewünschter Variante auf entsprechend gewählte Strukturen abgestimmt aufgebaut wird, wie dies einer bevorzugten Ausführungsform der vorliegenden Erfindung entspricht. Es wird also gemäß dieser bevorzugten Ausführungsform der vorliegenden Erfindung immer der gleiche Grundkörper bereitgestellt und je nach Ausstattungsvariante werden unterschiedliche Strukturen beim Drucken des Aufbaus bzw. der Polsterelemente berücksichtigt. Das heißt, dass unterschiedliche Strukturen in den Druck mit einbezogen oder freigelassen werden, unterschiedliche Strukturen verdeckt oder durch Aufdrucken solider Strukturen weiterentwickelt werden, bevor der Aufbau in Form von Polsterelementen gedruckt wird. So können aus gleichen Grundkörpern unterschiedliche Fahrzeugsitze hinsichtlich der Festigkeit einzelner Polsterbereiche, hinsichtlich des Vorhandenseins oder Nichtvorhandensein einzelner Polsterelemente und/oder hinsichtlich des Verdeckens oder Freilassens von Durchführungen für Gurte, Befestigungselemente für Kindersitze, Belüftungsleitungen und ähnliches geschaffen werden.

Bevorzugt sind zu diesem Zweck die Strukturen als begrenzte Flächen gegebenenfalls unterschiedlicher Rauheit, als Vertiefungen, Erhebungen und/oder Ausnehmungen ausgebildet. Mittels 3D-Druck können jedwede Kunststoffstrukturen erzeugt werden. Gemäß einer bevorzugten Ausführungsform der vorliegenden Erfindung ist das erfindungsgemäße Verfahren dahingehend weitergebildet, dass der Aufbau eine Oberflächenstruktur wie z.B. einen Textilersatz und/oder Lederersatz umfassend aufgebaut wird. Es ist daher nicht mehr nötig, die Polsterelemente nach dem Aufbauen abzudecken, sondern die Oberflächenstruktur bzw. Abdeckschicht wird mitgedruckt, sodass der fertige Formkörper unmittelbar erhalten wird.

Normalerweise wird beim 3D-Druck die Bauplattform in einer. Druckkammer des 3D-Druckers eingespannt, sodass ihre Lage zum Druckkopf eindeutig definiert ist. Im Rahmen der vorliegenden Erfindung ist es jedoch denkbar, die Grundkörper auf einem Fließband zum Drucker zu befördern und nach dem Drucken des Aufbaus auf demselben Fließband aus dem Drucker und zur weiteren Montage zu verbringen. Um hierbei die nötige Präzision der Anordnung der Polsterelemente zu ermöglichen ist die Erfindung bevorzugt dahingehend weitergebildet, dass die Lage des Grundkörpers relativ zum Druckkopf erfasst und die Steuerung des Druckkopfes an die Lage des Grundkörpers angepasst wird. Eine solche Lageerfassung ist mit modernen Kameras oder 3D-Scannern und entsprechenden Computersystemen möglich und kann daher im Rahmen der vorliegenden Erfindung implementiert werden.

Das erfindungsgemäße Erzeugnis ist nach dem soeben dargelegten erfindungsgemäßen Verfahren hergestellt und zeichnet sich dadurch aus, dass der Grundkörper und der Aufbau stofflich miteinander verbunden sind.

Erfindungsgemäße Erzeugnisse können vielerlei Gestalt annehmen. Bevorzugt ist das Erzeugnis jedoch als Fahrzeugsitz, als Teil eines Fahrzeugsitzes, z.B. als Armlehne oder'Kopfstütze, oder als Verkleidungsteil für ein Fahrzeug ausgebildet.

Die Erfindung wird nachfolgend anhand eines in der Zeichnung dargestellten Ausführungsbeispiels näher erläutert. In dieser zeigen:
Fig. 1 eine Darstellung eines Grundkörper zur Verwendung im Rahmen erfindungsgemäßen Verfahrens,
Fig. 2 eine Darstellung eines Grundkörpers mit darauf aufgebauten Polsterelementen gemäß einer ersten Variante und
Fig. 3 eine Darstellung eines Grundkörpers mit darauf aufgebauten Polsterelementen gemäß einer zweiten Variante

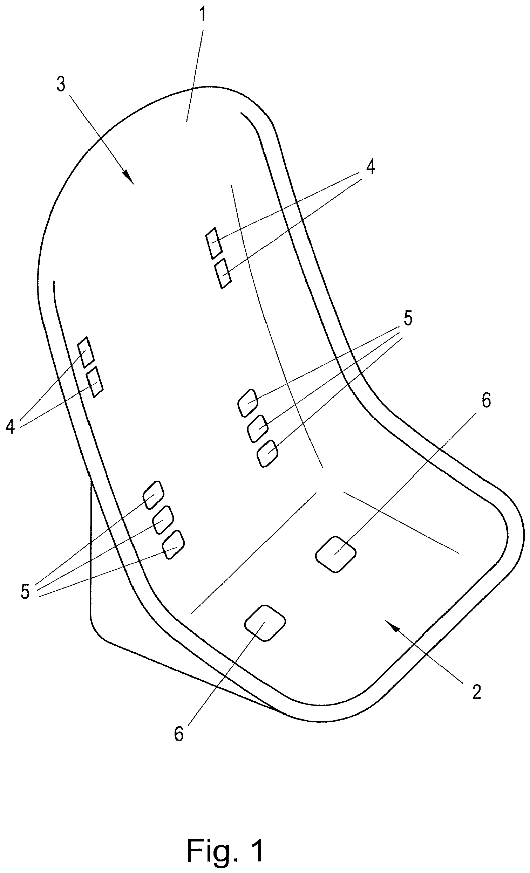

In Fig. 1 ist der Grundköper generell mit dem Bezugszeichen 1 bezeichnet. Der Grundkörper 1 hat im vorliegenden Fall eine schalen- oder wannenförmige Form, er kann jedoch jede Form annehmen, die zur Herstellung eines gepolsterten Formkörpers geeignet ist. Insbesondere kann der Grundkörper 1 auch eine Form aufweisen, die nur einem Teil eines Fahrzeugsitzes entspricht, beispielsweise einer Polsterauflage für eine Rückenlehne, wobei der fertige Formkörper als Polsterauflage an einem metallischen Stützgerüst (nicht gezeigt) für einen Fahrzeugsitz festgelegt werden kann, um den Fahrzeugsitz zu bilden. Der Grundkörper 1 zeigt im Falle der beispielhaften Ausführungsform von Fig. 1 im Wesentlichen einen Sitzbereich 2 und einen Rückenlehnenbereich 3, welche einteilig oder mehrteilig ausgebildet sein können und insbesondere auch gelenkig miteinander verbunden sein können. Der Grundkörper verfügt weiters über Strukturen für unterschiedliche Funktionalitäten des Formkörpers bzw. Fahrzeugsitzes. Unter diesen Strukturen sind Erhebungen 4, Lüftungsschlitze 5 sowie Gurtdurchführungen 6 zu nennen. Der Grundkörper 1 kann nun wie beschrieben mit einem 3D-Drucker bedruckt werden, um eine stoffliche Verbindung zwischen dem Grundkörper und dem Aufbau zu erhalten.

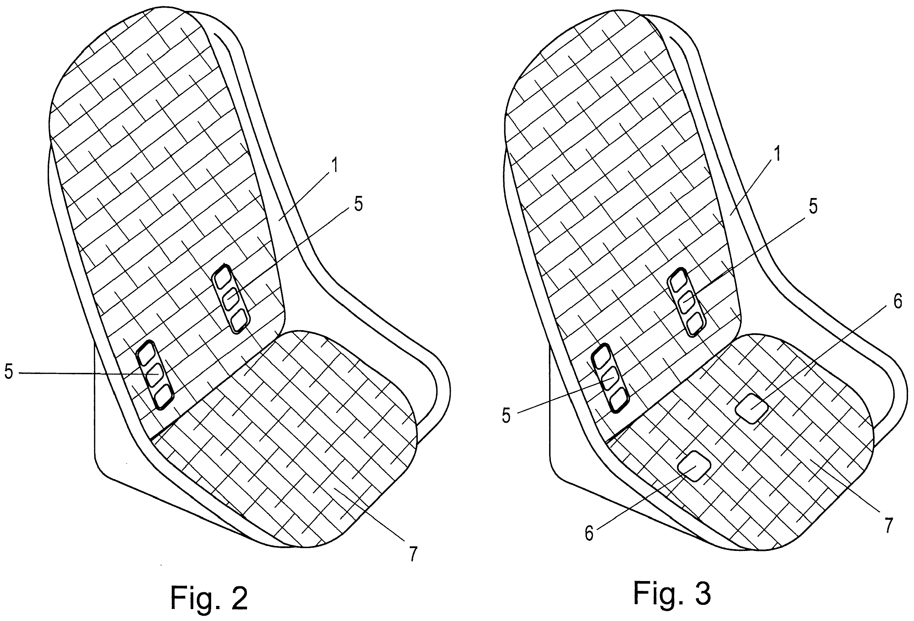

In Fig. 2 ist zu sehen, dass gemäß einer ersten Variante die Strukturen Gurtdurchführungen 6 und Erhebungen 4 mit einem nachgiebigen Polster-Aufbau 7 überdruckt wurden und nur die Strukturen Lüftungsschlitze 5 freigelassen wurden, um die Belüftung des Lumbalbereichs einer Person zu ermöglichen.

Gemäß einer zweiten Ausstattungsvariante, die schematisch in Figur 3, dargestellt ist, ist es im Rahmen der vorliegenden Erfindung möglich, beispielsweise zusätzlich zu den Lüftungsschlitzen 5 auch die Gurtdurchführungen 6, möglicherweise für Sportgurte freizulassen und den Aufbau auf diese Strukturen der Lüftungsschlitze 5 und Gurtdurchführungen 6 abgestimmt aufzubauen.

## Patentansprüche

1. Verfahren zur Fertigung eines Formkörpers, insbesondere eine Polsterauflage eines Fahrzeugsitzes, der Formkörper umfassend zumindest einen Grundkörper (1) und zumindest einen generativ gefertigten Aufbau (7), bei welchem der Aufbau (7) zumindest teilweise auf dem Grundkörper (1) und zumindest teilweise auf dem unfertigen Aufbau (7) mittels eines Druckkopfes zum Abgeben von Material aufgebaut wird, wobei der Aufbau (7) in Form einer nachgiebigen, im Wesentlichen rückfedernden Struktur aufgebaut wird.

2. Verfahren nach Anspruch 1, wobei der Aufbau (7) in Form eines Netzwerks, bevorzugt dreidimensionalen Netzwerks und/oder einer porösen Matrix, aufgebaut wird.

3. Verfahren nach Anspruch 1 oder 2, wobei der Aufbau (7) aus einem Material ausgewählt aus der Gruppe bestehend aus Polyurethan, Polylactiden und Polyolefinen wie z.B. Polyethylen und Polyethylenterephthalat aufgebaut wird.

4. Verfahren nach Anspruch 1, 2 oder 3, wobei der Formkörper einem Verformungsschritt unterworfen wird, insbesondere bei erhöhtem Druck und/oder erhöhter Temperatur.

5. Verfahren nach einem der Ansprüche 1 bis 4, wobei der Grundkörper (1) in Form eines Netzwerks, bevorzugt als Vlies, als dreidimensionales Netzwerk und/oder als poröse Matrix bereitgestellt wird.

6. Verfahren nach einem der Ansprüche 1 bis 5, wobei der Grundkörper (1) aus einem Material ausgewählt aus der Gruppe bestehend aus Polyurethan, Polylactiden und Polyolefinen wie z.B. Polyethylen und Polyethylenterephthalat bereitgestellt wird.

7. Verfahren nach einem der Ansprüche 1 bis 6, wobei der Grundkörper (1) vor dem Aufbauen des Aufbaus (7) mit einem Kunststoff beschichtet und/oder benetzt wird, bevorzugt mit einem Acrylharz und/oder Polychloropren.

8. Verfahren nach einem der Ansprüche 1 bis 7, wobei der Grundkörper (1) mit Strukturen (4,5,6) für die Herstellung unterschiedlicher Varianten von Formkörpern bereitgestellt wird und der Aufbau je nach gewünschter Variante auf entsprechend gewählte Strukturen (4,5,6) abgestimmt aufgebaut wird.

9. Verfahren nach einem der Ansprüche 1 bis 8, wobei die Strukturen (4,5,6) als begrenzte Flächen gegebenenfalls unterschiedlicher Rauheit, als Vertiefungen, Erhebungen und/oder Ausnehmungen ausgebildet sind.

10. Verfahren nach einem der Ansprüche 1 bis 9, wobei der Aufbau (7) eine Oberflächenstruktur wie z.B. einen Textilersatz und/oder Lederersatz umfassend aufgebaut wird.

11. Verfahren nach einem der Ansprüche 1 bis 10, wobei die Lage des Grundkörpers (1) relativ zum Druckkopf erfasst und die Steuerung des Druckkopfes an die Lage des Grundkörpers (1) angepasst wird.

12. Erzeugnis hergestellt nach einem der Ansprüche 1 bis 11, umfassend einen Grundkörper (1) und einen mit dem Grundkörper (1) stofflich verbundenen Aufbau.

13. Erzeugnis nach Anspruch 12, **dadurch gekennzeichnet, dass** das Erzeugnis als Fahrzeugsitz, als Teil eines Fahrzeugsitzes, z.B. als Armlehne oder Kopfstütze, oder als Verkleidungsteil für ein Fahrzeug ausgebildet ist.
